# EUROPEAN PATENT APPLICATION

(11) **EP 4 613 632 A1**
(43) Date of publication of application: **10.09.2025**
(21) Application number: 23906421.5
(22) Date of filing: 10.10.2023
(51) Int. Cl.: B63H 21/32, B01D 53/14, B01D 53/58, B63J 2/02, C01C 1/12

(54) **AMMONIA DETOXIFICATION SYSTEM, FLOATING BODY, AND AMMONIA DETOXIFICATION METHOD**

(30) Priority: 20.12.2022 JP 2022203574
(71) Applicant: Mitsubishi Heavy Industries, Ltd., Tokyo 100-8332 (JP)
(72) Inventor: TAKAMATSU Tomoteru, Yokohama-shi, Kanagawa 220-8401 (JP); YAMADA Daisuke, Yokohama-shi, Kanagawa 220-8401 (JP); YOSHIDA Atsushi, Yokohama-shi, Kanagawa 220-8401 (JP); TANAKA Yukio, Tokyo 100-8332 (JP)
(74) Representative: Studio Torta S.p.A.
(86) International application number: PCT/JP2023/036675
(87) International publication number: WO 2024/135046

(57) **Abstract**

An ammonia abatement system includes: a gas flow line through which a purge gas containing ammonia and an inert gas flows; a dilution tank in which an absorbing liquid capable of absorbing the ammonia is stored, and that is capable of temporarily storing the purge gas that is supplied from the gas flow line; a sending line through which a gas in a gas phase in the dilution tank is capable of being sent to an outside of the dilution tank; an abatement device that is connected to the sending line and detoxifies the ammonia contained in the gas that is sent through the sending line; a flow rate adjustment valve that is provided in the sending line; and a control device that controls an opening and closing operation of the flow rate adjustment valve, in which the control device causes the flow rate adjustment valve to transition from a closed state to an open state when ammonia concentration of the gas phase in the dilution tank, in which the purge gas is temporarily stored, falls below a predetermined value.

## Description

### TECHNICAL FIELD

The present disclosure relates to an ammonia abatement system, a floating body, and an ammonia abatement method.

Priority is claimed on Japanese Patent Application No. 2022-203574, filed December 20, 2022, the content of which is incorporated herein by reference.

### BACKGROUND ART

In a floating body such as a marine vessel, in a case where ammonia is used as fuel for a main engine or the like, it is assumed that ammonia and other fuel such as heavy oil are switched. In a case where such fuel switching is performed, or in a case where some trouble occurs in the main engine, it is necessary to discharge ammonia in a pipe of a fuel system by purging the inside of the pipe with an inert gas such as nitrogen.

However, ammonia may affect the surrounding environment. Therefore, it is not preferable that the ammonia discharged from the inside of the pipe is released as it is into the water or the atmosphere around the floating body, when performing the above-described purging.

In Patent Document 1, there is disclosed an ammonia gas abatement system that performs abatement treatment on an ammonia gas leaked from a freezer unit before the ammonia gas is released into the atmosphere. In this abatement system, a gas containing ammonia is led into a closed space such as a scrubber or a cooling tower and sufficiently brought into contact with water, so that an ammonia component is absorbed into the water.

In Patent Document 2, there is described an ammonia dilution device that dissolves an ammonia gas discharged in a case where an ammonia device is purged in dilution water and then performs wastewater treatment.

### Citation List

### Patent Documents

Patent Document 1: Japanese Unexamined Patent Application, First Publication No.2006-026555
Patent Document 2: Japanese Unexamined Patent Application, First Publication No.2002-028431

### SUMMARY OF INVENTION

### Technical Problem

Incidentally, when the purging is performed as described above, an inert gas such as nitrogen sent for the purging is discharged together with ammonia from the inside of the pipe. In a case where the inert gas is, for example, nitrogen, the nitrogen is not easily absorbed into water. Therefore, in the abatement systems and the ammonia dilution devices described in Patent Documents 1 and 2, the inert gas discharged from the inside of the pipe is hardly absorbed into water that absorbs an ammonia component in a closed space such as a scrubber or a cooling tower and in a dilution tank, and is released to the outside as it is. Since the flow rate of the inert gas in such purging is large, the absorbency of the ammonia component in the closed space or the dilution tank may be reduced due to the large amount of the flowing inert gas.

The present disclosure has been made in order to solve the above-described problems, and an object of the present disclosure is to provide an ammonia abatement system, a floating body, and an ammonia abatement method, in which it is possible to ensure the absorbency of ammonia when performing purging.

### Solution to Problem

In order to solve the above-described problems, an ammonia abatement system according to the present disclosure includes a gas flow line, a dilution tank, a sending line, an abatement device, a flow rate adjustment valve, and a control device. A purge gas containing ammonia and an inert gas flows through the gas flow line. An absorbing liquid capable of absorbing the ammonia is stored in the dilution tank. The dilution tank is configured to temporarily store the purge gas that is supplied from the gas flow line. A gas in a gas phase in the dilution tank is capable of being sent to an outside of the dilution tank through the sending line. The abatement device is connected to the sending line. The abatement device is configured to detoxify the ammonia contained in the gas that is sent through the sending line. The flow rate adjustment valve is provided in the sending line. The control device is configured to control an opening and closing operation of the flow rate adjustment valve. The control device causes the flow rate adjustment valve to transition from a closed state to an open state when ammonia concentration of the gas phase in the dilution tank in which the purge gas is temporarily stored, falls below a predetermined value.

A floating body according to the present disclosure includes a floating body main body, and the ammonia abatement system as described above.

An ammonia abatement method in the ammonia abatement system according to the present disclosure includes a step of introducing a purge gas, a step of absorbing ammonia by an absorbing liquid, and a step of sending a gas from a gas phase in a dilution tank to an abatement device. In the step of introducing the purge gas, the purge gas is introduced from the gas flow line into the dilution tank. In the step of absorbing ammonia by an absorbing liquid, the purge gas introduced into the dilution tank is temporarily stored in the dilution tank. In the step of absorbing ammonia by an absorbing liquid, the ammonia contained in the purge gas is absorbed by the absorbing liquid. In the step of sending a gas from the gas phase in the dilution tank to the abatement device, when the ammonia concentration in the gas phase in the dilution tank falls below a predetermined value, the flow rate adjustment valve is transitioned from a closed state to an open state and the gas is sent from the gas phase in the dilution tank to the abatement device through the sending line.

### Advantageous Effects of Invention

According to the ammonia abatement system, the floating body, and the ammonia abatement method of the present disclosure, it is possible to ensure the absorbency of ammonia when performing purging.

### BRIEF DESCRIPTION OF DRAWINGS

[FIG. 1] A side view of a floating body including an ammonia abatement system, a floating body, and an ammonia abatement method according to an embodiment of the present disclosured
[FIG. 2] A diagram showing a configuration of the ammonia abatement system according to the embodiment of the present disclosure.
[FIG. 3] A diagram showing the hardware configuration of a control device of the ammonia abatement system according to the embodiment of the present disclosure.
[FIG. 4] A functional block diagram of the control device according to the embodiment of the present disclosure.
[FIG. 5] A flowchart of the ammonia abatement method according to the embodiment of the present disclosure.
[FIG. 6] A diagram showing a step of introducing a purge gas according to the embodiment of the present disclosure.
[FIG. 7] A diagram showing a step of ending the purge gas introduction according to the embodiment of the present disclosure.
[FIG. 8] A diagram showing a step of transferring a gas phase according to the embodiment of the present disclosure.
[FIG. 9] A diagram showing the configuration of an ammonia abatement system according to a first modification example of the embodiment of the present disclosure.
[FIG. 10] A flowchart of an ammonia abatement method according to the first modification example of the embodiment of the present disclosure.

### DESCRIPTION OF EMBODIMENTS

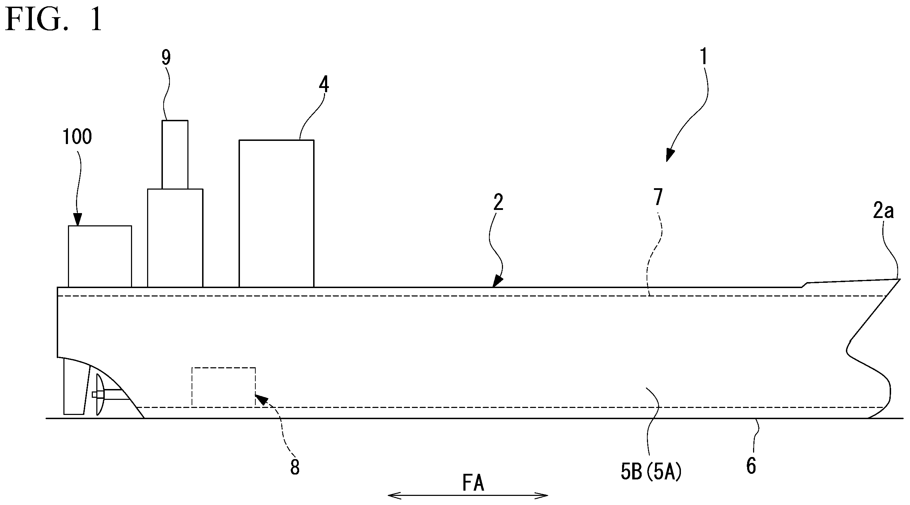

Hereinafter, an ammonia abatement system, a floating body, and an ammonia abatement method according to an embodiment of the present disclosure will be described with reference to FIGS. 1 to 8.

### (Overall Configuration of Floating Body)

As shown in FIG. 1, a floating body 1 of an embodiment of the present disclosure includes a floating body main body 2, a superstructure 4, a combustion device 8, and an ammonia abatement system 100. In this embodiment, a marine vessel capable of being navigated by a main engine or the like will be described as an example of the floating body 1. A ship type of the floating body 1 is not limited to a specific ship type. As the ship type of the floating body 1, a liquefied gas carrier, a ferry, a RORO ship, an automobile carrier, a passenger ship, or the like can be given. In this embodiment, a case where the floating body 1 is a marine vessel is described. However, the floating body 1 is not limited to a marine vessel and may be a floating storage unit (FSU), a floating storage and regasification unit (FSRU), or the like, which cannot be navigated by a main engine or the like.

The floating body main body 2 is formed to float on seawater. The floating body main body 2 has a pair of broadsides 5A and 5B and a bottom 6 forming an outer shell thereof. The broadsides 5A and 5B include a pair of broadside outer plates forming each of the left and right broadsides. The bottom 6 includes a bottom outer plate that connects the broadsides 5A and 5B. The outer shell of the floating body main body 2 is U-shaped in a cross section perpendicular to a fore and aft direction FA by the pair of broadsides 5A and 5B and the bottom 6.

The floating body main body 2 further includes an upper deck 7 which is a full deck disposed on the uppermost layer. The superstructure 4 is formed on the upper deck 7. A residential area or the like is provided in the superstructure 4. In the floating body 1 of this embodiment, for example, a cargo space (not shown) for loading cargo is provided on the bow 2a side in the fore and aft direction FA with respect to the superstructure 4.

The combustion device 8 is a device that generates thermal energy by combusting fuel, and is provided in the floating body main body 2. As the combustion device 8, an internal combustion engine that is used for a main engine for propelling the floating body 1, an internal combustion engine that is used for a power generation facility that supplies electricity to the marine vessel, a boiler that generates steam as an operating fluid, or the like can be provided as an exemplary example. In the combustion device 8 that is used as the main engine in the floating body 1 of this embodiment, ammonia and other fuel such as heavy oil different from ammonia can be switched and used as fuel. A fuel system (not shown) that supplies fuel is connected to the combustion device 8. In the fuel system, ammonia and other fuel flow.

In a case of switching the fuel of the combustion device 8 from ammonia to other fuel or in a case of performing maintenance, so-called purging is performed in which ammonia remaining in a pipe system including a fuel system of the combustion device 8 is replaced with an inert gas (purge gas) such as nitrogen. Here, the ammonia remaining in the pipe system may be liquefied ammonia or ammonia gas. In order to perform the purging, an inert gas supply device (not shown) is connected to the pipe system. The inert gas supply device can supply an inert gas to the pipe system. The inert gas may be any gas that does not undergo a chemical reaction when being in contact with ammonia, and for example, nitrogen can be provided as an exemplary example. In the inert gas supply device, in a case where an inert gas is supplied from an inert gas supply source (not shown) to the pipe system, ammonia in the pipe system is pushed out by the inert gas. In this way, the purge gas containing ammonia (liquefied ammonia or ammonia gas) and the inert gas is discharged from the pipe system.

### (Configuration of Ammonia Abatement System)

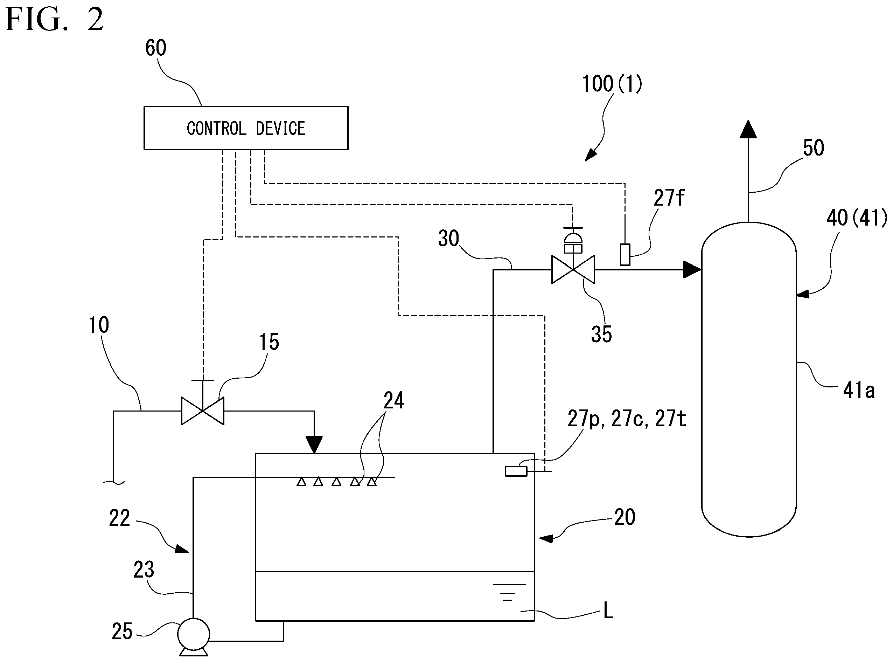

FIG. 2 is a diagram showing the configuration of the ammonia abatement system according to the embodiment of the present disclosure.

As shown in FIG. 2, the ammonia abatement system 100 includes at least a gas flow line 10, a dilution tank 20, a sending line 30, and an abatement device 40. The ammonia abatement system 100 detoxifies ammonia contained in the purge gas that is discharged from the pipe system when the ammonia in the pipe system is purged.

The gas flow line 10 forms a flow path for allowing the purge gas, which is discharged from the pipe system of the combustion device 8 (refer to FIG. 1) when performing the purging, to flow. The gas flow line 10 leads the flowing purge gas to the ammonia abatement system 100. The purge gas flowing in the gas flow line 10 includes ammonia and an inert gas.

An on-off valve 15 is provided in the middle of the gas flow line 10. The on-off valve 15 can open and close a flow path in the gas flow line 10. An opening and closing operation of the on-off valve 15 is controlled by a control device 60 which will be described later.

The dilution tank 20 has a hollow structure, and stores, in an inside thereof, an absorbing liquid L capable of absorbing ammonia. The dilution tank 20 may be a pressure vessel. The dilution tank 20 may be provided in a plurality of sets. As the absorbing liquid L, fresh water or seawater is supplied from the outside to the dilution tank 20 through a water intake pipe (not shown). In this way, a liquid that forms a liquid phase containing the absorbing liquid L is stored in a lower portion of the dilution tank 20. A gas that forms a gas phase is stored above the liquid phase in the dilution tank 20. The purge gas is introduced into the dilution tank 20 through the gas flow line 10. The ammonia component contained in the purge gas introduced into the dilution tank 20 is absorbed by the absorbing liquid L. In this way, the liquid of the liquid phase in the dilution tank 20 contains the absorbing liquid L and the ammonia component.

The dilution tank 20 is provided with an absorption promotion part 22. The absorption promotion part 22 promotes the absorption of ammonia by the absorbing liquid L in the dilution tank 20. The absorption promotion part 22 in this embodiment includes a circulation line 23, a spray 24, and a circulation pump 25. One end portion of the circulation line 23 communicates with the lower portion of the dilution tank 20. The other end portion of the circulation line 23 is disposed in the upper gas phase in the dilution tank 20. The spray 24 is provided at the other end portion of the circulation line 23 in the dilution tank 20. The circulation pump 25 is provided in the middle of the circulation line 23. The circulation pump 25 sucks the liquid phase in the dilution tank 20 into the circulation line 23 and circulates the liquid phase to the upper gas phase in the dilution tank 20. The liquid phase sucked into the circulation line 23 is sprayed into the upper gas phase in the dilution tank 20 through the spray 24. In this way, the absorbing liquid L contained in the liquid phase comes into contact with the ammonia in the gas phase in the dilution tank 20, and the absorption of ammonia is promoted.

For example, a pressure sensor 27p is provided in the dilution tank 20. The pressure sensor 27p determines the pressure of the gas phase in the dilution tank 20. The pressure sensor 27p outputs the determination data to the control device 60 (described below).

The sending line 30 can send the gas in the gas phase in the dilution tank 20 to the outside of the dilution tank 20. One end of the sending line 30 communicates with the upper part of the dilution tank 20. The other end of the sending line 30 is connected to the abatement device 40. The sending line 30 can send the gas in the gas phase in the dilution tank 20 to the abatement device 40.

A flow rate adjustment valve 35 is provided in the middle of the sending line 30. The flow rate adjustment valve 35 is capable of adjusting the flow rate of the gas flowing through the flow path in the sending line 30. The operation of the flow rate adjustment valve 35 is controlled by the control device 60.

A flow rate sensor 27f is provided in the sending line 30. The flow rate sensor 27f determines the flow rate of the gas that is sent out from the dilution tank 20 through the sending line 30. The flow rate sensor 27f outputs the determination data to the control device 60.

The abatement device 40 is connected to the sending line 30. The abatement device 40 detoxifies ammonia contained in the gas that is sent out through the sending line 30 to a reference value or less. The abatement device 40 is, for example, an absorption tower 41. The absorption tower 41 causes ammonia contained in the gas that is sent out through the sending line 30 to be absorbed into an absorbing liquid. The absorption tower 41 includes a tower main body 41a, and a nozzle (not shown) that sprays an absorbing liquid from an upper portion of the tower main body 41a. The other end of the sending line 30 is connected to a lower portion of the tower main body 41a. The gas sent out from the dilution tank 20 is sent into the tower main body 41a through the sending line 30. The absorption tower 41 causes ammonia contained in the gas to be absorbed into the absorbing liquid, for example, by causing fresh water or seawater to fall as the absorbing liquid from the nozzle in the tower main body 41a and bringing the absorbing liquid into contact with the gas introduced into the absorption tower 41.

The abatement device 40 is not limited to the absorption tower 41, and a dilution fan, a gas combustion unit (GCU), a catalytic combustion device, or the like is provided as an exemplary example. The dilution fan reduces the ammonia concentration in the gas by mixing the outside air (air) taken in from the outside with the gas sent out from the inside of the dilution tank 20 through the sending line 30. The gas combustion unit (GCU) and the catalytic combustion device reduce the ammonia concentration in the gas by combusting ammonia contained in the gas.

An exhaust line 50 is connected to the abatement device 40. The exhaust line 50 discharges the gas from which ammonia has been detoxified in the abatement device 40 to the atmosphere. As the exhaust line 50, for example, a vent post, a funnel 9 (refer to FIG. 1), or the like provided on the upper deck 7 of the floating body main body 2 can be used.

The control device 60 controls the opening and closing operation of the flow rate adjustment valve 35. In this embodiment, the control device 60 also controls the opening and closing operation of the on-off valve 15. The control device 60 controls the operations of the on-off valve 15 and the flow rate adjustment valve 35 to temporarily store the purge gas in the dilution tank 20 until the gas phase in the dilution tank 20 and the liquid phase in the dilution tank 20 are in a gas-liquid equilibrium state in the dilution tank 20, thereby performing so-called batch processing. The control device 60 causes the flow rate adjustment valve 35 to transition from a closed state to an open state, when the ammonia concentration in the gas phase in the dilution tank 20 falls below a predetermined value. In this embodiment, when the gas phase in the dilution tank 20 and the liquid phase in the dilution tank 20 are in the gas-liquid equilibrium state, the control device 60 sends the gas in the gas phase in the dilution tank 20 from the dilution tank 20 to the abatement device 40. The above-described specified value is ammonia concentration higher than the ammonia concentration in a case of being in the gas-liquid equilibrium state, and in a case where it is estimated that the gas-liquid equilibrium state is reached, the ammonia concentration in the gas phase in the dilution tank 20 falls below a specified value. As the specified value, ammonia concentration slightly higher than the ammonia concentration in the gas-liquid equilibrium state can be provided as an exemplary example.

Here, in general, the term "gas-liquid equilibrium state" is a state in which there is no mass transfer between the gas phase and the liquid phase. However, strictly speaking, since the temperature slightly but constantly changes, the mass transfer always occurs. In the present embodiment, for example, in a case where the pressure of the gas phase is in a predetermined range from the saturated vapor pressure (for example, a range of the saturated vapor pressure + 20%), it is regarded as the gas-liquid equilibrium state.

### (Hardware Configuration Diagram)

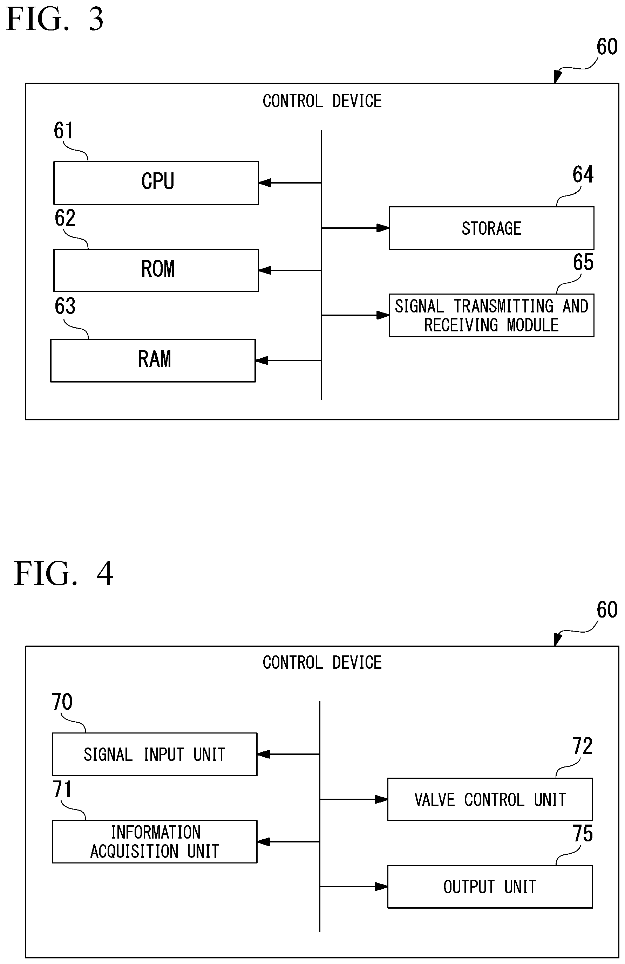

FIG. 3 is a diagram showing a hardware configuration of the control device according to the embodiment of the present disclosure.

As shown in FIG. 3, the control device is a computer including a central processing unit (CPU) 61, a read only memory (ROM) 62, a random access memory (RAM) 63, a storage 64, and a signal transmitting and receiving module 65. The signal transmitting and receiving module 65 receives determination signals from the pressure sensor 27p and the flow rate sensor 27f.

### (Functional Block Diagram)

FIG. 4 is a functional block diagram of the control device according to the embodiment of the present disclosure.

As shown in FIG. 4, the CPU 61 of the control device 60 realizes each configuration of a signal input unit 70, an information acquisition unit 71, a valve control unit 72, and an output unit 75 by executing a program stored in advance in a storage device such as the ROM 62 or the storage 64.

The signal input unit 70 receives the determination signals from the pressure sensor 27p and the flow rate sensor 27f via the signal transmitting and receiving module 65 that is hardware.

In a case of being in a state where the purge gas has been introduced into the dilution tank 20, the information acquisition unit 71 acquires determination data of the pressure in the dilution tank 20 determined by the pressure sensor 27p, based on the signal received by the signal input unit 70. In addition, in a case where the gas in the gas phase of the dilution tank 20 is sent out through the sending line 30, based on the signal received by the signal input unit 70, the information acquisition unit 71 acquires determination data of the flow rate of the gas in the sending line 30 determined by the flow rate sensor 27f.

The valve control unit 72 brings the flow rate adjustment valve 35 into a closed state when the purge gas is introduced into the dilution tank 20 from the gas flow line 10. The valve control unit 72 controls the operation of the flow rate adjustment valve 35, based on the determination data of the pressure in the dilution tank 20 and the determination data of the flow rate of the gas in the sending line 30, which are acquired by the information acquisition unit 71. Specifically, the valve control unit 72 determines whether or not the gas phase and the liquid phase in the dilution tank 20 are in the gas-liquid equilibrium state, based on the amount of change in the pressure in the dilution tank 20 determined by the pressure sensor 27p. In a case where it is determined that the gas phase and the liquid phase in the dilution tank 20 are in the gas-liquid equilibrium state, the valve control unit 72 causes the flow rate adjustment valve 35 to transition from a closed state to an open state. In addition, when the flow rate of the gas determined by the flow rate sensor 27f exceeds a reference flow rate, the valve control unit 72 reduces the opening degree of the flow rate adjustment valve 35.

In addition, the valve control unit 72 opens the on-off valve 15 when the purge gas is introduced from the gas flow line 10 into the dilution tank 20. The valve control unit 72 closes the on-off valve 15 when the gas is sent from the gas phase in the dilution tank 20 to the outside through the sending line 30.

The valve control unit 72 outputs a command signal for switching the opening and closing states of the on-off valve 15 and the flow rate adjustment valve 35.

The output unit 75 outputs the command signal output from the valve control unit 72 to the on-off valve 15 and the flow rate adjustment valve 35.

### (Ammonia Abatement Method)

Next, an ammonia abatement method of the floating body in the embodiment of the present disclosure will be described with reference to the drawings.

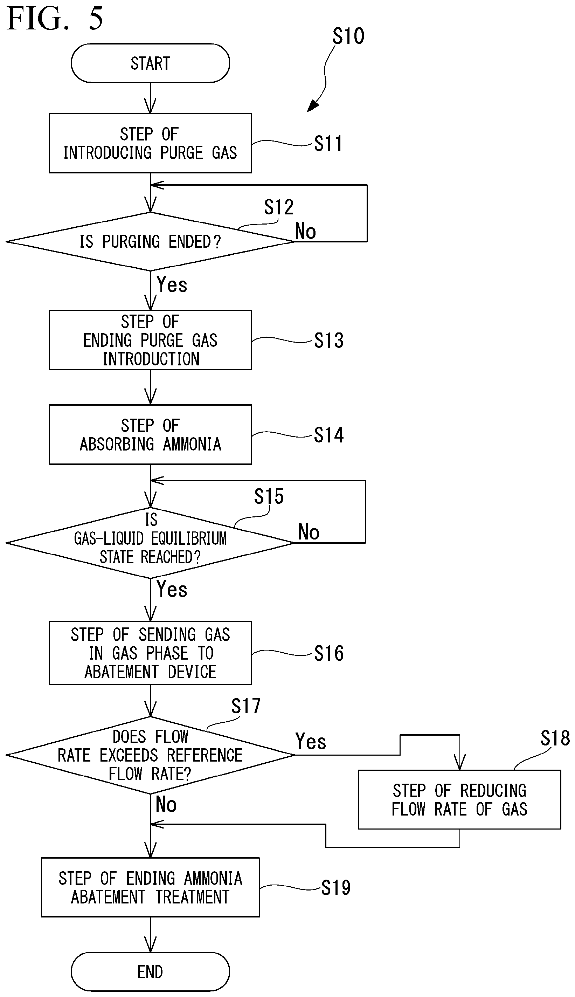

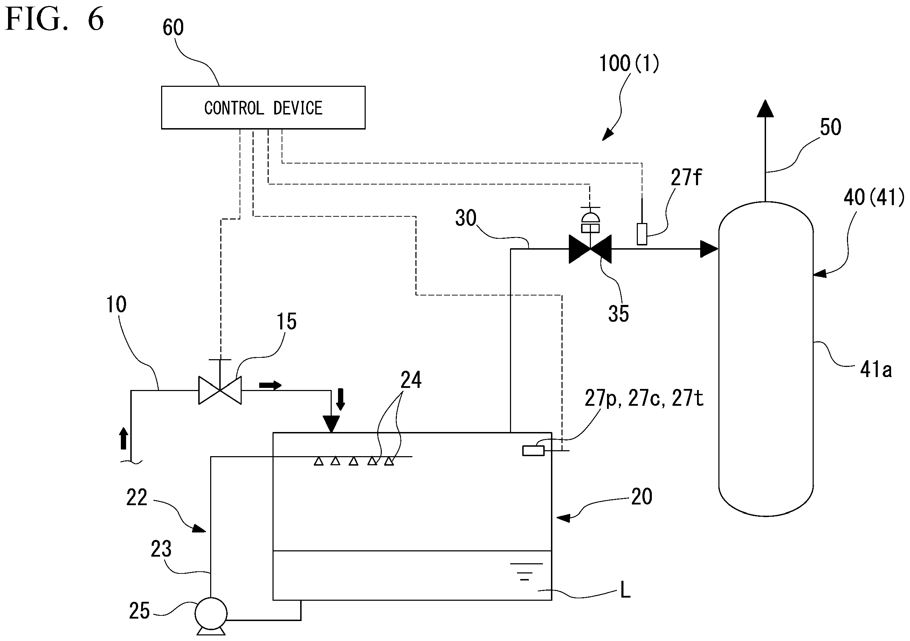

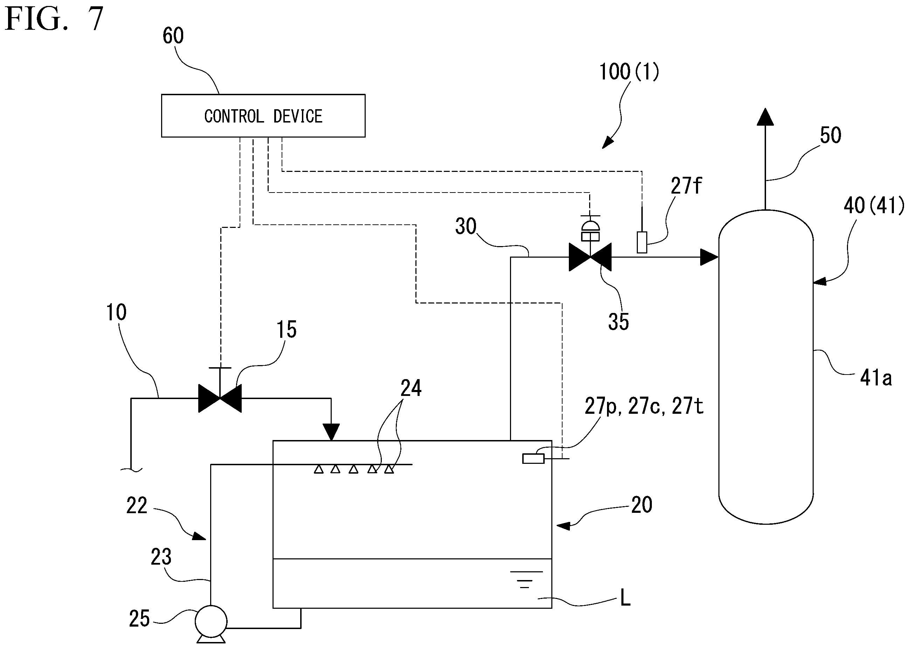

FIG. 5 is a flowchart of the ammonia abatement method in the embodiment of the present disclosure. FIG. 6 is a diagram showing a step of introducing a purge gas according to the embodiment of the present disclosure. FIG. 7 is a diagram showing a step of ending the purge gas introduction according to the embodiment of the present disclosure.

As shown in FIG. 5, an ammonia abatement method S10 of this embodiment includes a step S11 of introducing a purge gas, a step S12 of determining whether or not purging is ended, a step S13 of ending the purge gas introduction, a step S14 of absorbing ammonia, a step S15 of determining whether or not a gas-liquid equilibrium state is reached, a step S16 of sending a gas in a gas phase to an abatement device, a step S17 of determining whether or not the flow rate exceeds a reference flow rate, a step S18 of reducing the flow rate of a gas, and a step S19 of ending the ammonia abatement treatment.

In the ammonia abatement system 100, the absorbing liquid L is stored in the dilution tank 20 in advance before the ammonia abatement method S10 is executed. As the absorbing liquid L, fresh water or seawater is taken in from the outside of the dilution tank 20 through a water intake pipe (not shown).

In addition, the on-off valve 15 and the flow rate adjustment valve 35 are closed.

In step S11 of introducing a purge gas, when the purging is performed by sending an inert gas into the pipe system, the purge gas containing ammonia and an inert gas is introduced into the dilution tank 20. In this case, as shown in FIG. 6, the on-off valve 15 of the gas flow line 10 is opened under the control of the valve control unit 72 (refer to FIG. 4) of the control device 60. Then, the purge gas is introduced into the dilution tank 20 through the gas flow line 10.

In step S12 of determining whether or not the purging is ended, the control device 60 determines whether or not the supply of the inert gas for the purging of the pipe system has ended.

As a result, in a case where it is determined that the supply of the inert gas has not been ended and the purging has not been ended (in step S12, "No"), the state of step S11 is continued.

On the other hand, in a case where it is determined that the supply of the inert gas has been ended and the purging has been ended (in step S12, "Yes"), the process proceeds to step S13.

In step S13 of ending purge gas introduction, the on-off valve 15 is closed as shown in FIG. 7 in a state where the supply of the inert gas to the pipe system has been ended. In this way, the inside of the dilution tank 20 to which the purge gas is supplied is a space closed between the on-off valve 15 and the flow rate adjustment valve 35, both of which are in a closed state.

In step S14 of absorbing ammonia, the ammonia component contained in the purge gas introduced into the dilution tank 20 is absorbed into the absorbing liquid L. In this case, in the absorption promotion part 22, the circulation pump 25 is operated, the liquid in a liquid phase in the dilution tank 20 is sucked into the circulation line 23, and the liquid is sprayed from the spray 24 into the upper gas phase in the dilution tank 20. As a result, the absorbing liquid L contained in the liquid in the liquid phase comes into contact with the ammonia in the gas phase in the dilution tank 20, and the thus absorption of ammonia is promoted. The step S14 may be performed in parallel with steps S11 to S13.

In step S15 of determining whether or not a gas-liquid equilibrium state is reached, the pressure sensor 27p determines the pressure of the gas phase in the dilution tank 20 every unit time set in advance during the continuation of step S14. The data of the pressure of the gas phase determined by the pressure sensor 27p is output to the control device 60. The valve control unit 72 of the control device 60 determines whether or not the gas phase and the liquid phase in the dilution tank 20 are in the gas-liquid equilibrium state. In this embodiment, in a case where the valve control unit 72 of the control device 60 acquires the data of the pressure of the gas phase determined by the pressure sensor 27p two or more times, the valve control unit 72 determines whether or not the amount of change per unit time of the pressure is less than a threshold value set in advance. As a result of this determination, in a case where the amount of change per unit time of the pressure of the gas phase in the dilution tank 20 determined by the pressure sensor 27p is equal to or greater than the threshold value (in step S15, "No"), step S14 is continued as it is.

On the other hand, in a case where the amount of change per unit time of the pressure of the gas phase in the dilution tank 20 determined by the pressure sensor 27p is less than the threshold value (in step S15, "Yes"), the process proceeds to step S16. In a case where the amount of change per unit time of the pressure of the gas phase in the dilution tank 20 determined by the pressure sensor 27p is less than the threshold value, it can be estimated that the absorption of ammonia into the absorbing liquid L has reached a saturation state. That is, in a case where the amount of change per unit time of the pressure of the gas phase in the dilution tank 20 determined by the pressure sensor 27p is less than the threshold value, it can be determined that the gas phase and the liquid phase in the dilution tank 20 are in the gas-liquid equilibrium state.

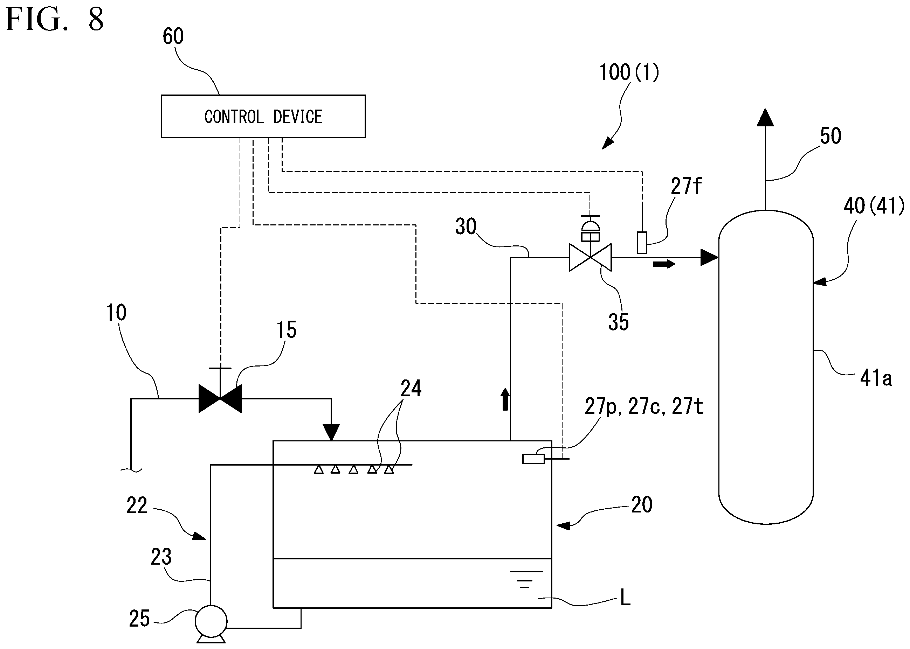

FIG. 8 is a diagram showing a step of transferring the gas phase according to the embodiment of the present disclosure.

In step S16 of sending the gas in a gas phase to the abatement device, the flow rate adjustment valve 35 is opened under the control of the valve control unit 72 (refer to FIG. 4) of the control device 60, as shown in FIG. 8. Then, the gas in a gas phase in the dilution tank 20 is sent to the abatement device 40 through the sending line 30.

The gas sent to the abatement device 40 is subjected to predetermined abatement treatment in the abatement device 40, and the ammonia contained in the gas is detoxified. In addition, the gas from which ammonia has been detoxified by the abatement device 40 is discharged into the atmosphere through the exhaust line 50.

In step S16, in a case where the flow rate adjustment valve 35 is in an open state, the flow rate sensor 27f determines the flow rate of the gas sent to the abatement device 40 through the sending line 30 every unit time set in advance. The data of the flow rate of the gas determined by the flow rate sensor 27f is output to the control device 60.

In step S17 of determining whether or not the flow rate exceeds a reference flow rate, the valve control unit 72 determines whether or not the flow rate of the gas determined by the flow rate sensor 27f exceeds the reference flow rate. As a result of this determination, in a case where the determined flow rate of the gas in the sending line 30 is equal to or less than the reference flow rate (in step S17, "No"), the sending of the gas to the abatement device 40 is continued without performing the flow rate adjustment by the flow rate adjustment valve 35. On the other hand, in a case where the determined flow rate of the gas in the sending line 30 exceeds the reference flow rate (in step S17, "Yes"), the process proceeds to step S18.

In step S18 of reducing the flow rate of the gas, the valve control unit 72 reduces the opening degree of the flow rate adjustment valve 35 to set the flow rate of the gas in the sending line 30 to be equal to or less than the reference flow rate. In this way, the gas in a gas phase is sent from the dilution tank 20 to the abatement device 40 at a flow rate equal to or less than the reference flow rate.

In step S19 of ending the ammonia abatement treatment, the ammonia abatement treatment in the ammonia abatement system 100 is ended at a point in time when an ending condition determined in advance is satisfied. As the condition for ending the ammonia abatement treatment, for example, the condition that the pressure in the dilution tank 20 is reduced to a value less than a limit value set in advance, the condition that the flow rate of the gas determined by the flow rate sensor 27f is reduced to a value less than a limit value set in advance, the condition that the elapsed time after the purge gas introduction is ended in step S13 reaches a reference time set in advance, or the like can be given.

### (Operation and Effect)

In the ammonia abatement system 100, the floating body 1, and the ammonia abatement method S10 of the embodiment described above, in a case where a pipe or the like, through which ammonia flows, is purged with an inert gas, the purge gas containing ammonia and an inert gas is supplied to the dilution tank 20. Then, the purge gas supplied to the dilution tank 20 is temporarily stored in the dilution tank 20. Further, the absorbing liquid L is stored in the dilution tank 20, and the ammonia contained in the purge gas temporarily stored in the dilution tank 20 is absorbed into the absorbing liquid L. In this way, the ammonia concentration of the gas phase in the dilution tank 20 can be reduced with the passage of time. When the ammonia concentration of the gas phase in the dilution tank 20 falls below a specified value, the control device 60 causes the flow rate adjustment valve 35 to transition from a closed state to an open state, and sends the gas in a gas phase in the dilution tank 20 to the abatement device 40 outside the dilution tank 20 through the sending line 30.

In this manner, a large amount of purge gas flowing in through the gas flow line 10 when performing the purging is temporarily stored in the dilution tank 20, so that it is possible to perform treatment of absorbing ammonia contained in the purge gas in the dilution tank 20 by so-called batch processing that is not continuous processing, and thus it is possible to sufficiently reduce the ammonia concentration of the gas phase in the dilution tank 20 without using a mixer or the like. In addition, rapid inflow of a large amount of purge gas flowing in through the gas flow line 10 into the abatement device 40 is also suppressed.

Furthermore, since a large amount of gas is not continuously sent from the dilution tank 20 to the abatement device 40, it is not necessary to treat a large amount of ammonia in a short time by the abatement device 40, and downsizing of the abatement device 40 can be achieved. In addition, as the abatement device 40, for example, even a device that takes a long time to start up when detoxifying ammonia can be adopted. Furthermore, in a case where the abatement device 40 is an absorption tower (scrubber), it is possible to suppress the occurrence of so-called flooding in which water that is sprayed downward in the absorption tower flows back upward due to the inflow of a large amount of inert gas.

In the embodiment described above, when the gas phase in the dilution tank 20 and the liquid phase in the dilution tank 20 are in the gas-liquid equilibrium state, the control device 60 causes the flow rate adjustment valve 35 to transition from a closed state to an open state.

In this way, the ammonia contained in the purge gas temporarily stored in the dilution tank 20 can be maximally absorbed into a diluent in the dilution tank 20. Therefore, the gas in a gas phase in which the ammonia concentration is sufficiently reduced can be sent from the dilution tank 20 to the abatement device 40.

In the embodiment described above, the control device 60 determines whether or not the gas phase in the dilution tank 20 and the liquid phase in the dilution tank 20 are in the gas-liquid equilibrium state, based on the amount of change in the pressure in the dilution tank 20 determined by the pressure sensor 27p. Therefore, it is possible to easily determine whether or not the gas-liquid equilibrium state is reached.

In the embodiment described above, when the flow rate of the gas determined by the flow rate sensor 27f exceeds the reference flow rate, the opening degree of the flow rate adjustment valve 35 is reduced.

In this way, it is possible to suppress the flow rate of the gas that is sent to the abatement device 40 from excessively increasing regardless of a pressure height of the gas phase in the dilution tank 20. Therefore, it is possible to suppress the inflow of the gas having an excessive flow rate exceeding the treatment capacity of the abatement device 40.

In the embodiment described above, the flow rate adjustment valve 35 is in a closed state when the purge gas is introduced into the dilution tank 20 from the gas flow line 10.

In this way, it is possible to suppress the purge gas introduced into the dilution tank 20 from being sent to the abatement device 40 without being sufficiently diluted. Further, the ammonia contained in the purge gas can be batch-processed in the dilution tank 20, and the ammonia concentration in the gas in a gas phase of the dilution tank 20 can be sufficiently reduced.

In the embodiment described above, when the gas is sent from the gas phase in the dilution tank 20 to the outside through the sending line 30, the on-off valve 15 that opens and closes the gas flow line 10 is closed.

In this way, the gas in a gas phase temporarily stored in the dilution tank 20 is suppressed from flowing back in the gas flow line 10.

In a case where the dilution tank 20 of the embodiment described above is formed by a pressure vessel, when the purge gas is temporarily stored in the dilution tank 20, the purge gas can be stored in a state where the pressure thereof is increased. In this way, the dilution tank 20 can be downsized, which can contribute to downsizing of the entire ammonia abatement system 100.

### (First Modification Example of Embodiment)

Next, a first modification example of the embodiment of the present disclosure will be described with reference to the drawings. The first modification example is different from the above-described embodiment only in that a bypass line 10a is provided. Therefore, the same parts as those in the above-described embodiment will be denoted by the same reference signs, and overlapping description will be omitted.

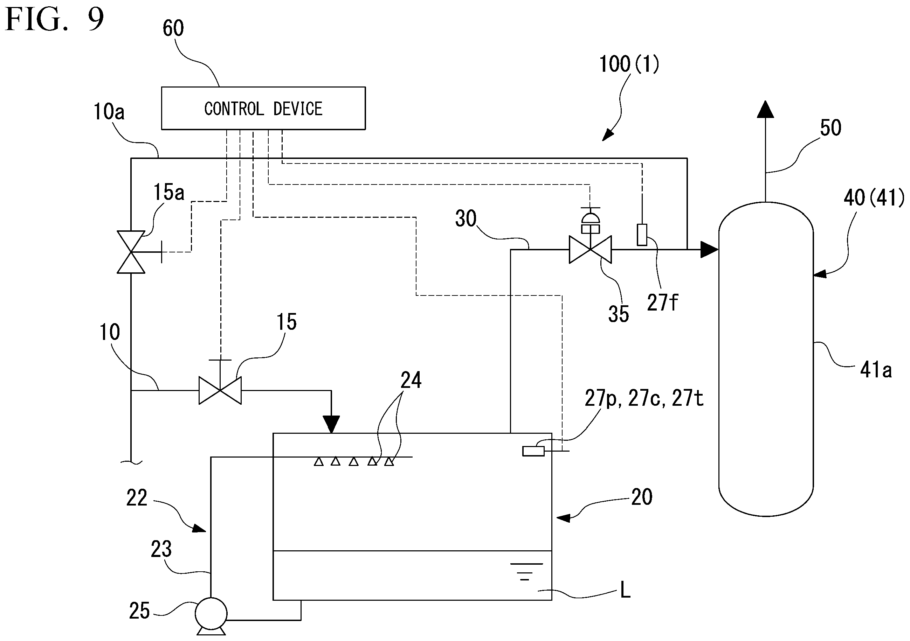

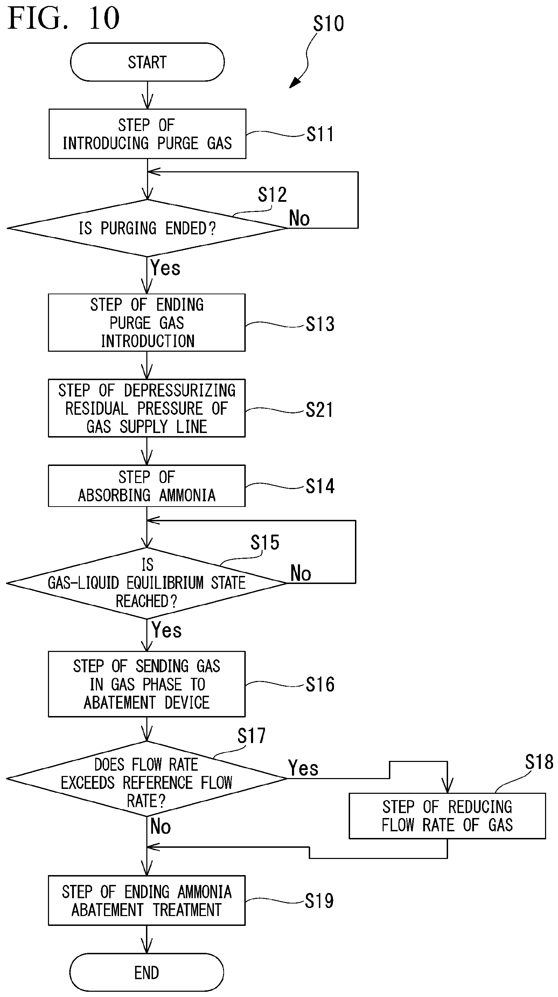

FIG. 9 is a diagram showing the configuration of an ammonia abatement system according to the first modification example of the embodiment of the present disclosure. FIG. 10 is a flowchart of an ammonia abatement method according to the first modification example of the embodiment of the present disclosure.

The floating body 1 of the first modification example includes the floating body main body 2, the superstructure 4, the combustion device 8, and the ammonia abatement system 100.

As shown in FIG. 9, the ammonia abatement system 100 includes the gas flow line 10, the dilution tank 20, the sending line 30, the abatement device 40, and the bypass line 10a.

The bypass line 10a is branched from the gas flow line 10 on a side (in other words, an upstream side) closer to the combustion device 8 (refer to FIG. 1) with respect to the on-off valve 15 and connected to be joined to the sending line 30 on a side (in other words, a downstream side) closer to the abatement device 40 with respect to the flow rate adjustment valve 35. The bypass line 10a includes a valve 15a in the middle thereof. The flow path in the bypass line 10a can be opened and closed by opening and closing the valve 15a. The valve 15a is in a normally closed state and is opened only when necessary.

As shown in FIG. 10, the ammonia abatement method S10 in the first modification example includes a step S11 of introducing a purge gas, a step S12 of determining whether or not purging is ended, a step S13 of ending the purge gas introduction, a step S21 of depressurizing residual pressure of a gas supply line, a step S14 of absorbing ammonia, a step S15 of determining whether or not a gas-liquid equilibrium state is reached, a step S16 of sending a gas in a gas phase to an abatement device, a step S17 of determining whether or not the flow rate exceeds a reference flow rate, a step S18 of reducing the flow rate of a gas, and a step S19 of ending the ammonia abatement treatment. Since steps S10 to S13 and S14 to S19 are the same as those in the first embodiment described above, the detailed description thereof will be omitted.

In step S21 of depressurizing residual pressure of a gas supply line, the residual pressure of the gas flow line 10 is depressurized after step S13 of ending the purge gas introduction. Here, the gas flow line 10 described above is a line having pressure due to the back pressure of the dilution tank 20. Therefore, the valve control unit 72 of the control device 60 opens the valve 15a in a state where the on-off valve 15 and the flow rate adjustment valve 35 are closed after step S13 of ending the purge gas introduction, in order to depressurize the gas flow line 10.

With such a configuration, the residual pressure of the gas flow line 10 can be released to the abatement device 40 via the bypass line 10a and the sending line 30.

### (Other Embodiments)

The embodiments of the present disclosure have been described in detail above with reference to the drawings. However, the specific configuration is not limited to these embodiments, and design changes and the like within a scope which does not depart from the gist of the present disclosure are also included.

In the embodiment described above, the control device 60 determines whether or not the gas phase in the dilution tank 20 and the liquid phase in the dilution tank 20 are in the gas-liquid equilibrium state, based on the amount of change in the pressure in the dilution tank 20 determined by the pressure sensor 27p. However, there is no limitation thereto.

For example, as shown in FIG. 4, a concentration sensor 27c that determines the ammonia concentration in at least one of the gas phase and the liquid phase in the dilution tank 20 may be provided. In this case, in step S15, the control device 60 may determine whether or not the gas phase in the dilution tank 20 and the liquid phase in the dilution tank 20 are in the gas-liquid equilibrium state, based on the ammonia concentration determined by the concentration sensor 27c.

In a case where the ammonia concentration determined by the concentration sensor 27c is used as a criterion for determining whether or not the gas-liquid equilibrium state is reached, when the flow rate adjustment valve 35 is transitioned from a closed state to an open state after the gas-liquid equilibrium state is reached, a gas having excessively high ammonia concentration is suppressed from being sent to the abatement device 40. Therefore, it is possible to suppress a load on the abatement device 40 for detoxifying ammonia from becoming excessively high.

In addition, as shown in FIG. 4, a temperature sensor 27t that determines the temperature of the gas phase in the dilution tank 20 may be provided.

When ammonia contained in the purge gas is absorbed into a treatment liquid in the dilution tank 20, the temperature of the gas in a gas phase and the temperature of the liquid in a liquid phase in the dilution tank 20 rise due to the reaction heat. Since some of the abatement devices 40 do not allow a high-temperature gas to be sent thereto, in a case where the temperature of the gas phase in the dilution tank 20 determined by the temperature sensor 27t does not fall below a reference temperature, the control device 60 may prohibit the control of causing the flow rate adjustment valve 35 to transition from a closed state to an open state. Specifically, even in a case where in step S16 shown in FIG. 5, it can be determined that the gas phase and the liquid phase in the dilution tank 20 are in the gas-liquid equilibrium state, so-called interlock control may be performed such that the flow rate adjustment valve 35 does not transition from a closed state to an open state, as long as the temperature of the gas phase in the dilution tank 20 determined by the temperature sensor 27t does not fall below the reference temperature. In this way, the gas having an excessively high temperature is suppressed from being sent to the abatement device 40. As a result, the abatement function of the abatement device 40 can be sufficiently exhibited.

Further, in the embodiment described above, when the gas phase in the dilution tank 20 and the liquid phase in the dilution tank 20 are in the gas-liquid equilibrium state, the gas in a gas phase in the dilution tank 20 is sent from the dilution tank 20 to the abatement device 40. However, there is no limitation to a case where a complete gas-liquid equilibrium state is reached, and for example, the control device 60 may cause the flow rate adjustment valve 35 to transition from a closed state to an open state at a point in time when the ammonia concentration of the gas phase in the dilution tank 20 falls below a predetermined value set in advance, which can be estimated to be close to the gas-liquid equilibrium state.

In addition, in the embodiment described above, the opening and closing operation of the on-off valve 15 is controlled by the control device 60. However, the opening and closing of the on-off valve 15 may be performed by the worker at the start and end of the purging.

Further, in the embodiment described above, the absorbing liquid L is sprayed from the nozzle provided in the upper part of the dilution tank 20. However, there is no limitation thereto. For example, when the purge gas is supplied into the dilution tank 20 through the gas flow line 10, the purge gas may be supplied into the liquid phase in the dilution tank 20.

In addition, the order of the procedures of the ammonia abatement method shown in the embodiment described above can be appropriately changed. In addition, a plurality of steps may be carried out in parallel.

In the embodiment described above, a case where the so-called interlock control of prohibiting the control of causing the flow rate adjustment valve 35 to transition from a closed state to an open state is performed in a case where the temperature of the gas phase in the dilution tank 20 determined by the temperature sensor 27t does not fall below the reference temperature is provided as an exemplary example. However, there is no limitation to a case of performing only the interlock control. For example, a heat exchanger may be provided in the circulation line 23 to remove the reaction heat. A gas having an excessively high temperature is suppressed from being sent to the abatement device 40. As a result, the abatement function of the abatement device 40 can be sufficiently exhibited.

### <Additional Remark>

The ammonia abatement system 100, the floating body, and the ammonia abatement method described in the embodiment are understood as follows, for example.

(1) An ammonia abatement system 100 according to a first aspect includes: a gas flow line 10 through which a purge gas containing ammonia and an inert gas flows; a dilution tank 20 in which an absorbing liquid L capable of absorbing the ammonia is stored, and that is capable of temporarily storing the purge gas that is supplied from the gas flow line 10; a sending line 30 through which a gas in a gas phase in the dilution tank 20 is capable of being sent to an outside of the dilution tank 20; an abatement device 40 that is connected to the sending line 30 and detoxifies the ammonia contained in the gas that is sent through the sending line 30; a flow rate adjustment valve 35 that is provided in the sending line 30; and a control device 60 that controls an opening and closing operation of the flow rate adjustment valve 35, in which the control device 60 causes the flow rate adjustment valve 35 to transition from a closed state to an open state when ammonia concentration of the gas phase in the dilution tank 20, in which the purge gas is temporarily stored, falls below a predetermined value.

As an example of the abatement device 40, an absorption tower, a dilution fan, a GCU, and a catalytic combustion device can be given. As an example of the inert gas, nitrogen can be given. As an example of the absorbing liquid L, fresh water or seawater can be given.

In the ammonia abatement system 100, in a case where a pipe or the like through which ammonia flows is purged with an inert gas, when the inert gas is sent to the pipe or the like, the purge gas containing ammonia and the inert gas is supplied to the dilution tank 20 through the gas flow line 10. At this time, since the flow rate adjustment valve 35 provided in the sending line 30 is in a closed state, the purge gas in the dilution tank 20 is not sent out to the outside of the dilution tank 20 through the sending line 30, and the purge gas that is supplied from the gas flow line 10 is temporarily stored in the dilution tank 20. Since the absorbing liquid L is stored in the dilution tank 20, the ammonia contained in the purge gas temporarily stored in the dilution tank 20 is absorbed into the absorbing liquid L. In this way, the ammonia concentration of the gas phase in the dilution tank 20 is reduced with the passage of time. The control device 60 causes the flow rate adjustment valve 35 to transition from a closed state to an open state when the ammonia concentration of the gas phase in the dilution tank 20 falls below the specified value. Then, the gas in a gas phase in the dilution tank 20 is sent to the abatement device 40 outside the dilution tank 20 through the sending line 30. In the abatement device 40, the ammonia contained in the gas sent thereto is detoxified.

In this manner, a large amount of purge gas flowing in through the gas flow line 10 during the purging is temporarily stored in the dilution tank 20, so that the ammonia contained in the purge gas is absorbed into the absorbing liquid L in the dilution tank 20, and thus the ammonia concentration of the gas phase in the dilution tank 20 is reduced with the passage of time and the ammonia concentration of the gas phase can be sufficiently reduced.

In the dilution tank 20, the treatment of absorbing the ammonia contained in the purge gas can be performed by so-called batch processing that is not continuous processing, and thus the ammonia concentration of the gas phase in the dilution tank 20 can be sufficiently reduced without using a mixer or the like. In addition, rapid inflow of a large amount of purge gas flowing in through the gas flow line 10 into the abatement device 40 is also suppressed.

Furthermore, since a large amount of gas is not continuously sent from the dilution tank 20 to the abatement device 40, it is not necessary to treat a large amount of ammonia in a short time by the abatement device 40, and downsizing of the abatement device 40 can be achieved. In addition, as the abatement device 40, for example, even a device that takes a long time to start up when detoxifying ammonia can be adopted.

(2) In an ammonia abatement system 100 according to a second aspect, in the ammonia abatement system 100 of the above (1), the control device 60 causes the flow rate adjustment valve 35 to transition from a closed state to an open state when the gas phase in the dilution tank 20 and a liquid phase in the dilution tank 20 are in a gas-liquid equilibrium state.

In this manner, when the gas phase in the dilution tank 20 and the liquid phase in the dilution tank 20 are in the gas-liquid equilibrium state, the flow rate adjustment valve 35 is transitioned from a closed state to an open state, so that the ammonia contained in the purge gas can be maximally absorbed by the diluent in the dilution tank 20. Therefore, after the ammonia concentration of the gas in a gas phase in the dilution tank 20 is sufficiently reduced, the gas can be sent to the abatement device 40.

(3) In an ammonia abatement system 100 according to a third aspect, the ammonia abatement system 100 of the above (2) further includes: a pressure sensor 27p that determines the pressure of the gas phase in the dilution tank 20, or a concentration sensor 27c that determines ammonia concentration in at least one of the gas phase and the liquid phase in the dilution tank 20, in which the control device 60 determines whether or not the gas-liquid equilibrium state is reached, based on at least one of an amount of change in the pressure in the dilution tank 20 determined by the pressure sensor 27p and the ammonia concentration determined by the concentration sensor 27c.

In this way, since the amount of change in the pressure in the dilution tank 20 determined by the pressure sensor 27p can be used as a criterion for determining whether or not the gas-liquid equilibrium state is reached, it is possible to easily determine whether or not the gas-liquid equilibrium state is reached. In addition, since the ammonia concentration determined by the concentration sensor 27c can be used as a criterion for determining whether or not the gas-liquid equilibrium state is reached, it is possible to easily determine whether or not the gas-liquid equilibrium state is reached.

(4) In an ammonia abatement system 100 according to a fourth aspect, the ammonia abatement system 100 of any one of the above (1) to (3) further includes: a temperature sensor 27t that determines a temperature of the gas phase in the dilution tank 20, in which the control device 60 prohibits control of causing the flow rate adjustment valve 35 to transition from a closed state to an open state when where the temperature of the gas phase in the dilution tank 20 determined by the temperature sensor 27t does not fall below a reference temperature.

When ammonia contained in the purge gas is absorbed into a treatment liquid in the dilution tank 20, the temperature of the gas in a gas phase and the temperature of the liquid in a liquid phase in the dilution tank 20 rise due to the reaction heat. Some of the abatement devices 40 do not allow a high-temperature gas to be sent thereto. On the other hand, in a case where the temperature of the gas phase in the dilution tank 20 determined by the temperature sensor 27t does not fall below the reference temperature, the control of causing the flow rate adjustment valve 35 to transition from a closed state to an open state is prohibited, so that a gas having an excessively high temperature can be suppressed from being sent to the abatement device 40. In this way, the abatement function of the abatement device 40 can be sufficiently exhibited.

(5) In an ammonia abatement system 100 according to a fifth aspect, the ammonia abatement system 100 of any one of the above (1) to (4) further includes: a flow rate sensor 27f that determines the flow rate of the gas that is sent out from the dilution tank 20 through the sending line 30, in which the control device 60 reduces an opening degree of the flow rate adjustment valve 35 when the flow rate of the gas determined by the flow rate sensor 27f exceeds a reference flow rate.

When the flow rate of the gas determined by the flow rate sensor 27f exceeds the reference flow rate, the flow rate of the gas that is sent to the abatement device 40 can be suppressed to be equal to or less than the reference flow rate.

(6) In an ammonia abatement system 100 according to a sixth aspect, in the ammonia abatement system 100 of any one of the above (1) to (5), the control device 60 brings the flow rate adjustment valve 35 into a closed state when the purge gas is introduced from the gas flow line 10 into the dilution tank 20.

With such a configuration, when the purge gas is introduced into the dilution tank 20 from the gas flow line 10, the flow rate adjustment valve 35 is brought into a closed state, so that the purge gas introduced into the dilution tank 20 can be temporarily stored in the dilution tank 20. Therefore, the ammonia contained in the purge gas can be sufficiently absorbed by the absorbing liquid L in the dilution tank 20, and the ammonia concentration in the gas in a gas phase in the dilution tank 20 can be sufficiently reduced. In addition, a large amount of purge gas flowing in during the purging is suppressed from reaching the abatement device 40 from the dilution tank 20.

(7) In an ammonia abatement system 100 according to a seventh aspect, the ammonia abatement system 100 of any one of the above (1) to (6) further includes: an on-off valve 15 that opens and closes the gas flow line 10, in which the on-off valve 15 is closed when the gas is sent from the gas phase in the dilution tank 20 to an outside through the sending line 30.

In this way, the gas in a gas phase temporarily stored in the dilution tank 20 is suppressed from flowing back in the gas flow line 10.

(8) In an ammonia abatement system 100 according to an eighth aspect, in the ammonia abatement system 100 of any one of the above (1) to (7), the dilution tank 20 is formed by a pressure vessel.

In this way, when the purge gas is temporarily stored in the dilution tank 20, the purge gas can be stored in a state where the pressure thereof is increased. In this way, the dilution tank 20 can be downsized, which can contribute to downsizing of the entire ammonia abatement system 100.

(9) In an ammonia abatement system 100 according to a ninth aspect, the ammonia abatement system 100 of any one of the above (1) to (8) further includes: an on-off valve 15 that opens and closes the gas flow line 10; and a bypass line 10a that bypasses the dilution tank 20 and is capable of allowing communication between the gas flow line 10 on an upstream side of the on-off valve 15 and a downstream side of the flow rate adjustment valve 35.

In this way, the residual pressure remaining in the gas flow line 10 due to the internal pressure of the dilution tank 20 can be released to, for example, the abatement device 40 or the like on the downstream side with respect to the flow rate adjustment valve 35.

(10) A floating body according to a tenth aspect includes: a floating body main body; and the ammonia abatement system 100 of any one of the above (1) to (9).

In this way, it is possible to provide a floating body equipped with an ammonia abatement system capable of ensuring the absorbency of ammonia when performing purging.

(11) An ammonia abatement system 100 according to an eleventh aspect is an ammonia abatement method in the ammonia abatement system of any one of the above (1) to (10), the method includes: a step S11 of introducing the purge gas from the gas flow line into the dilution tank 20; a step S14 of temporarily storing the purge gas introduced into the dilution tank 20 in the dilution tank 20 and absorbing ammonia contained in the purge gas by the absorbing liquid L; and a step S16 of, when the ammonia concentration in the gas phase in the dilution tank 20 falls below a predetermined value, causing the flow rate adjustment valve 35 to transition from a closed state to an open state and sending a gas from the gas phase in the dilution tank 20 to the abatement device 40 through the sending line 30.

In this way, it is possible to ensure the absorbency of ammonia when performing purging.

### INDUSTRIAL APPLICABILITY

According to the ammonia abatement system, the floating body, and the ammonia abatement method of the present disclosure, it is possible to ensure the absorbency of ammonia when performing purging.

### REFERENCE SIGNS LIST

1 Floating body
2 Floating body main body
2a Bow
4 Superstructure
5A, 5B Broadside
6 Bottom
7 Upper deck
8 Combustion device
9 Funnel
10 Gas flow line
15 On-off valve
20 Dilution tank
22 Absorption promotion part
23 Circulation line
24 Spray
25 Circulation pump
27c Concentration sensor
27f Flow rate sensor
27p Pressure sensor
27t Temperature sensor
30 Sending line
35 Flow rate adjustment valve
40 Abatement device
41 Absorption tower
41a Tower main body
50 Exhaust line
60 Control device
61 CPU
62 ROM
63 RAM
64 Storage
65 Signal transmitting and receiving module
70 Signal input unit
71 Information acquisition unit
72 Valve control unit
75 Output unit
100 Ammonia abatement system
FA Fore and aft direction
L Absorbing liquid
S10 Ammonia abatement method
S11 Step of introducing purge gas
S12 Step of determining whether or not purging is ended
S13 Step of ending purge gas introduction
S14 Step of absorbing ammonia
S15 Step of determining whether or not gas-liquid equilibrium state is reached
S16 Step of sending gas in gas phase to abatement device
S17 Step of determining whether or not flow rate exceeds reference flow rate
S18 Step of reducing flow rate of gas
S19 Step of ending ammonia abatement treatment

## Claims

1. An ammonia abatement system comprising:
a gas flow line through which a purge gas containing ammonia and an inert gas flows;
a dilution tank in which an absorbing liquid absorbing the ammonia is stored, and that is configured to temporarily store the purge gas that is supplied from the gas flow line;
a sending line through which a gas in a gas phase in the dilution tank is sent to an outside of the dilution tank;
an abatement device that is connected to the sending line and is configured to detoxify the ammonia contained in the gas that is sent through the sending line;
a flow rate adjustment valve that is provided in the sending line; and
a control device configured to control an opening and closing operation of the flow rate adjustment valve,
wherein the control device causes the flow rate adjustment valve to transition from a closed state to an open state when ammonia concentration of the gas phase in the dilution tank, in which the purge gas is temporarily stored, falls below a predetermined value.

2. The ammonia abatement system according to Claim 1,
wherein the control device causes the flow rate adjustment valve to transition from a closed state to an open state when the gas phase in the dilution tank and a liquid phase in the dilution tank are in a gas-liquid equilibrium state.

3. The ammonia abatement system according to Claim 2, further comprising:
a pressure sensor configured to determine a pressure of the gas phase in the dilution tank, or a concentration sensor configured to determine ammonia concentration in at least one of the gas phase and the liquid phase in the dilution tank,
wherein the control device determines whether or not the gas-liquid equilibrium state is reached, based on at least one of an amount of change in a pressure in the dilution tank determined by the pressure sensor and the ammonia concentration determined by the concentration sensor.

4. The ammonia abatement system according to Claim 1 or 2, further comprising:
a temperature sensor configured to determine a temperature of the gas phase in the dilution tank,
wherein the control device prohibits control of causing the flow rate adjustment valve to transition from a closed state to an open state when the temperature of the gas phase in the dilution tank determined by the temperature sensor does not fall below a reference temperature.

5. The ammonia abatement system according to Claim 1 or 2, further comprising:
a flow rate sensor configured to determine a flow rate of the gas that is sent out from the dilution tank through the sending line,
wherein the control device reduces an opening degree of the flow rate adjustment valve when the flow rate of the gas determined by the flow rate sensor exceeds a reference flow rate.

6. The ammonia abatement system according to Claim 1 or 2,
wherein the control device brings the flow rate adjustment valve into a closed state when the purge gas is introduced from the gas flow line into the dilution tank.

7. The ammonia abatement system according to Claim 1 or 2, further comprising:
an on-off valve configured to open and close the gas flow line,
wherein the on-off valve is closed when the gas is sent from the gas phase in the dilution tank to an outside through the sending line.

8. The ammonia abatement system according to Claim 1 or 2,
wherein the dilution tank is formed by a pressure vessel.

9. The ammonia abatement system according to Claim 1 or 2, further comprising:
an on-off valve configured to open and close the gas flow line; and
a bypass line configured to bypass the dilution tank and to allow communication between the gas flow line on an upstream side of the on-off valve and a downstream side of the flow rate adjustment valve.

10. A floating body comprising:
a floating body main body; and
the ammonia abatement system according to Claim 1 or 2.

11. An ammonia abatement method in the ammonia abatement system according to Claim 1 or 2, the method comprising:
a step of introducing the purge gas from the gas flow line into the dilution tank;
a step of temporarily storing the purge gas introduced into the dilution tank in the dilution tank and absorbing ammonia contained in the purge gas by the absorbing liquid; and
a step of, when the ammonia concentration in the gas phase in the dilution tank falls below a predetermined value, causing the flow rate adjustment valve to transition from a closed state to an open state and sending a gas from the gas phase in the dilution tank to the abatement device through the sending line.
